# EUROPEAN PATENT APPLICATION

(11) **EP 0 806 369 A1**
(43) Date of publication of application: **12.11.1997**
(21) Application number: 97302957.2
(22) Date of filing: 30.04.1997
(51) Int. Cl.: B65D 39/08, B29C 45/16, B65D 53/02

(54) **Closure plug with bonded gasket**

(30) Priority: 06.05.1996 US 643594
(71) Applicant: Rieke Corporation, Auburn, Indiana 46706-2095 (US)
(72) Inventor: McLelland, Douglas M., Ft. Wayne, Indiana 46804 (US)
(74) Representative: Bannerman, David Gardner

(57) **Abstract**

A closure plug (20) for the threaded receipt by the raised neck finish of a container for closing off the neck finish in a liquid-tight fashion includes a closure plug body having an annular flange (25) at one end and opposite thereto an externally threaded portion (26), the closure plug body being formed out of a thermoplastic material. Assembled to the closure plug body is an annular sealing gasket (22) which is molded out of a thermoplastic elastomer of an EPDM base with polypropylene added. The annular sealing gasket is integrally bonded to the closure plug body at a molecular level by actually fusing or cross-linking the material of the sealing gasket with the material of the closure plug body.

## Description

### BACKGROUND OF THE INVENTION

The present invention relates in general to a molded, threaded plastic closure plug for closing the open outlet of a storage container. The closure plug includes a molded sealing gasket which is drawn into compression against the upper edge of the container outlet. More specifically, the present invention relates to a molded closure plug and molded gasket combination wherein the gasket is created by a two-step injection molding process resulting in fusing of the gasket material with the plug material at their interface.

When considering existing technology, it will be understood that threaded closure plugs are typically used to seal closed the outlet opening of a container. Normally the outlet opening is internally threaded and includes an upper annular edge which is disposed above the series of internal threads. The closure plug is normally externally threaded with a radial flange which has a diameter size at least as large as the diameter of the outlet opening so as to extend over the outlet opening. A gasket is assembled onto the closure plug and positioned against the radial flange. When the closure plug is threadedly assembled into the outlet opening of the container, the gasket is disposed between the radial flange and the upper annular edge. As the plug is threadedly advanced into the outlet opening, the desire is for the gasket to be compressed by the radial flange into sealing engagement against the upper annular edge of the outlet opening. The desired liquid-tight seal which is intended to be created by the gasket in this combination is an important consideration of the present invention.

In order to ensure that the gasket will stay on the closure plug, the inside diameter of the gasket may be sized so as to be smaller than the outside diameter of the closure plug in the plug portion where the gasket is to be positioned. While sizing the inside diameter of the gasket in this manner will tend to keep the gasket assembled to the plug body, the time and effort to properly assemble the gasket onto the closure plug increases. In order to be able to install the gasket onto the closure plug in this manner, the gasket must be stretched and pulled in order to move it into position. As this occurs, there is a probability that the gasket will be turned or twisted in some fashion such that the sealing surface of the gasket, that surface which is intended to contact the upper annular edge, may not be properly aligned. A concern over a turned or twisted gasket is relevant whenever the sealing surface of the gasket is misaligned with the upper annular edge of the container outlet opening. In order to try and preclude the presence of a closure plug assembly with a turned or twisted gasket, some designs have gone to a square-cut gasket or use an O-ring. As should be understood, even if the O-ring twists or turns, its radiused sealing surface for the most part will remain aligned relative to the upper annular edge of the outlet opening. With a square-cut gasket, it can normally be stretched and pulled without twisting and it is fairly easy to see if any twist has been introduced into the gasket and to untwist the gasket in the final assembly. Accordingly, the designed flat, annular sealing surface of the square-cut gasket remains or can be made substantially planar and directed toward the upper annular edge.

Another concern with current closure plug designs which incorporate a loose, separate sealing gasket is the size or extent of the "bulge area". When the gasket is free to walk or shift, it is difficult to ensure that the necessary amount of gasket material will be centered over the neck finish edge in order to obtain an adequate seal. As these gaskets are axially compressed, they expand or extrude themselves laterally and, if unchecked, can thin out to where there is not an adequate seal. While one could modify the closure plug body to try and trap and retain the gasket or dramatically over-size the gasket to account for the shift or walk, these are costly changes. By means of the present invention where the sealing gasket is integrally bonded to the plug body, the bulge area can be decreased (by approximately one-half) because the sealing gasket cannot shift or walk. It is also possible with the present invention to more accurately control the alignment of the contacting surface of the sealing gasket with the target location on the container neck finish.

If the gasket design is limited to a square-cut gasket or to an O-ring, the sealing surface shape is fixed. With a square gasket, the sealing surface has an annular ring, substantially flat shape. With an O-ring, the sealing surface has a part-circular, radiused shape. While either shape may provide adequate sealing engagement against the upper annular edge, optimal sealing depends on the specific geometry of the upper annular edge of the outlet opening. If the upper annular edge geometry is known, it is possible to specifically shape the sealing surface of the gasket to that particular edge geometry so as to create a more optimal seal.

If the sealing surface shape needs to be something other than flat or radiused, neither a square-cut gasket nor an O-ring will provide the optimal design. However, if a specially-shaped gasket is desired for optimal sealing, there is a concern that it will twist during installation and the specifically-shaped sealing surface may not be properly oriented relative to the outlet opening.

When a sealing gasket is manually assembled onto and around an annular plug body, the gasket has a tendency to wander and shift. This is clearly a problem and more pronounced when the inside diameter of the gasket has been enlarged slightly relative to the outside diameter of the plug body in order to make assembly of the gasket onto the plug body somewhat easier. This type of wandering or shifting movement can preclude obtaining a secure seal between the gasket and the annular upper edge of the outlet opening. Another problem which can result from a slippage of the gasket around the closure plug body is an erroneous torque reading. If the closure plug is to be tightened to a particular torque value and the gasket slips with the turning of the plug, the torque reading will not be reliable.

There is a presently used molding technique which is referred to herein as a two-step injection molding process. In this process, a first component is molded and before it is ejected from the mold, a second material is added for another portion or feature and is integrally joined to the first component. There is at least one company which describes its use of a comolding or coextruding process whereby thermoplastic polymers of different hardness are bonded together. This company is DSM Thermoplastic Elastomers, Inc. of Leominster, Massachusetts 01453.

With regard to the present invention as described and illustrated herein, a novel and unobvious way to use a two-step injection molding process has been conceived in order to create a new part, the benefits of which have not heretofore been available. The new part, a threaded closure plug, is able to be designed in an optimum fashion depending on the style of container, a result not heretofore possible nor envisioned. The second phase of the fabrication process of the present invention creates a sealing gasket whose shape is specifically selected for optimum sealing. The gasket is constructed in such a way that it does not turn or twist as it is anchored to the threaded plug body and, once assembled, will not shift radially nor twist. This is achieved by first molding the closure plug body and before the polymeric material of the plug body has fully set, a related material is used to mold the sealing gasket. These two materials undergo a fusing or cross-linking process at the molecular level which integrally bonds the gasket to the plug body.

Over the years, a variety of molding compounds have been invented for sealing gaskets as well as a variety of gasket shapes and styles. The gasket styles have been employed in a variety of structures and for a variety of applications. The following listed U.S. patents are believed to provide a representative sampling of these earlier design efforts:

| PATENT NO. | PATENTEE | ISSUE DATE |
|---|---|---|
| 3,607,362 | Cormack, Jr. | Sep. 21, 1971 |
| 3,283,936 | Kehe, et al. | Nov. 8, 1966 |
| 5,275,287 | Thompson | Jan. 4, 1994 |
| 4,527,705 | Prades | Jul. 9, 1985 |
| 4,700,860 | Li | Oct. 20, 1987 |
| 1,423,592 | Baldwin | Jul. 25, 1922 |
| 3,935,968 | Rausing | Feb. 3, 1976 |
| 2,920,778 | Foye | Jan. 12, 1960 |
| 3,532,244 | Yates, Jr. | Oct. 6, 1970 |
| 5,137,164 | Bayer | Aug. 11, 1992 |
| 4,697,716 | Mumford | Oct. 6, 1987 |
| 4,585,135 | Sinnott | Apr. 29, 1986 |
| 4,304,744 | Stroud | Dec. 8, 1981 |
| 4,988,467 | Holdsworth et al. | Jan. 29, 1991 |
| 4,968,469 | White | Nov. 6, 1990 |
| 4,068,776 | Wszolek | Jan. 17, 1978 |

Even in view of this wide variety of earlier design efforts, the present invention is still novel and unobvious. It is to be noted that the two-step injection molding process used with the present invention has not heretofore been applied to a closure plug and sealing gasket combination whereby the sealing gasket can be specifically shaped for optimizing the sealed interface of the cooperating container outlet opening. Associated with the present invention is a novel and unobvious mold and fixture design as well as a novel and unobvious method of fabricating the closure plug and sealing gasket.

### SUMMARY OF THE INVENTION

A closure plug for closing off the neck finish of a container in a liquid-tight fashion according to one embodiment of the present invention comprises a closure plug body having an annular flange at one end and opposite thereto an externally threaded portion. The closure plug body is formed out of a synthetic material and is combined with an annular sealing gasket which is fabricated out of a thermoplastic elastomer of an elastomeric base with a carrier resin that is compatible with the plug body material. The sealing gasket is integrally bonded to the closure plug body at a molecular level.

One object of the present invention is to provide an improved closure plug for closing off the neck finish of a container.

Related objects and advantages of the present invention will be apparent from the following description.

### BRIEF DESCRIPTION OF THE DRAWINGS

FIG. 1 is a fragmentary, front elevational view of a closure plug according to a typical embodiment of the present invention.

FIG. 1A is a partial, front elevational view of a closure plug body comprising a portion of the FIG. 1 closure plug.

FIG. 2 is a perspective view of the FIG. 1 closure plug.

FIG. 3 is a front elevational view in full section of a container outlet opening.

FIG. 4 is a partial, front elevational view in full section of the FIG. 1 closure plug threaded into the FIG. 3 outlet opening.

FIG. 4A is an enlarged detail of the gasket-outlet opening interface of FIG. 4.

FIG. 5 is a partial, front elevational view in full section of a closure plug according to another embodiment of the present invention.

FIG. 6 is a partial, front elevational view in full section of a closure plug according to another embodiment of the present invention.

FIG. 7 is a partial, front elevational view in full section of a closure plug according to another embodiment of the present invention.

FIG. 8 is a front elevational view in full section of a closure plug according to another embodiment of the present invention.

FIG. 9 is a front elevational view in full section of a container outlet opening intended to receive the FIG. 8 closure plug.

FIG. 10 is diagrammatic, side elevational view of the first station of a molding fixture arrangement for performing the two-step injection molding process of the present invention.

FIG. 11 is a diagrammatic, side elevational view of the second station of the FIG. 10 molding fixture as arranged for the second step of the molding process for creating the sealing gasket.

### DESCRIPTION OF THE PREFERRED EMBODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

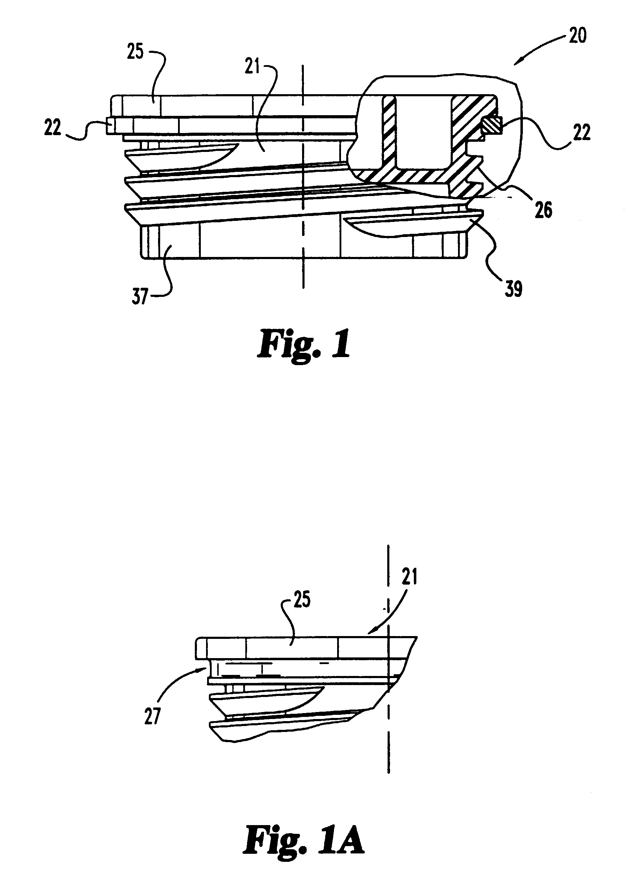

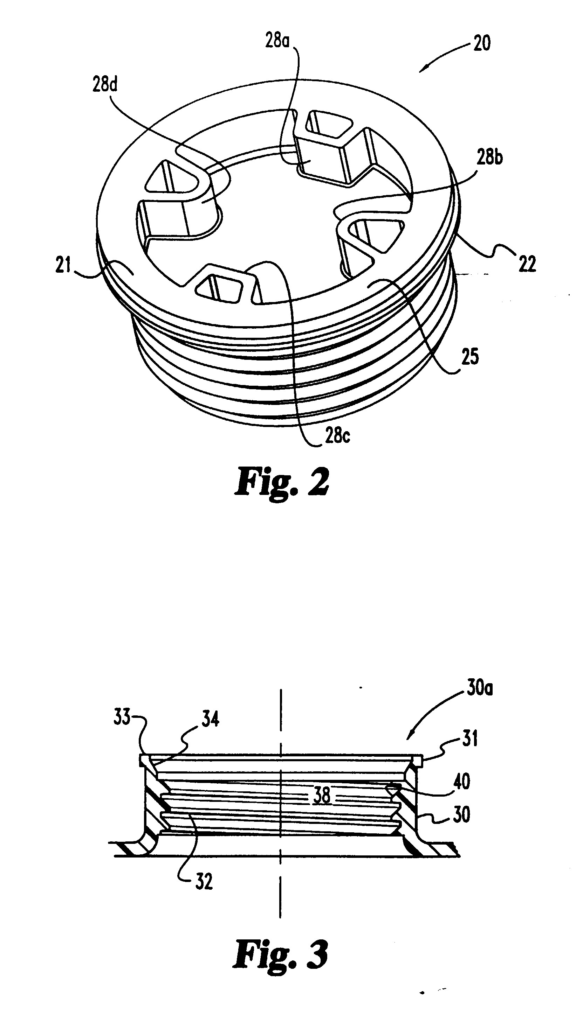

Referring to FIGS. 1, 1A, and 2, there is illustrated a closure plug 20 which includes a plastic closure plug body 21 and a flexible sealing gasket 22. A suitable material for sealing gasket 22 is a thermoplastic elastomer of an elastomeric base with a carrier resin that is compatible with the plug body material. As will be explained hereinafter, a type of two-step injection molding process is used in order to create a fused or cross-linked attachment between the gasket material and the plug body material. Consequently, when we refer to compatibility between the carrier resin and the plug body material, it is with regard to the fused or cross-linked bonding. Once the bonding occurs, the closure plug 20 becomes the equivalent of a single, integral assembly. As fused and bonded to the plug body 21, the sealing gasket 22 is unable to twist or turn or pull off or separate from the closure plug body 21, without tearing or breaking the sealing gasket.

The top plan view of FIG. 2 in combination with FIG. 1 illustrates that the closure plug body 21 is a substantially annular member having an upper annular flange 25 and therebelow an externally threaded portion 26. An annular, outwardly opening channel 27 (see FIG. 1A) is positioned between the underside of the upper flange and the start of the first thread of the threaded portion 26. Channel 27 is sized, shaped, and positioned to receive sealing gasket 22.

The upper annular flange 25 defines a recess 28 formed with four radially inward projections 28a-28d for manually tightening and removing the closure plug 20 relative to the neck finish 30. The four projections are positioned approximately 90 degrees apart and are integrally molded as part of the unitary closure plug body 21. Projections 28a and 28c have a similar geometry with "corners" that are slightly greater than 90 degrees. The other two projections 28b and 28d have a more rounded contour for a more comfortable feel to the fingers of a user when manually advancing the closure plug onto or manually unscrewing the closure plug from container neck finish 30.

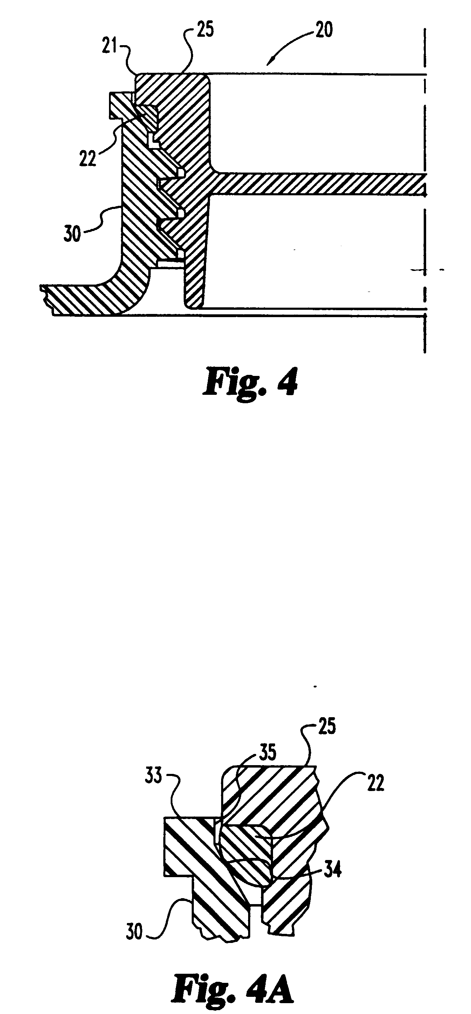

Referring to FIG. 3, the internally-threaded container neck finish 30 defines an outlet opening 30a. Further, neck finish 30 includes an annular upper edge or lip 31 and a generally cylindrical hollow interior 32. The lip 31 is configured with an upper surface 33, inclined surface 34, and intermediate surface 35. Neck finish 30 is a raised extension of the receptacle or container which is designed to receive closure plug 20. The hollow interior 32 leads to the interior of the container. Closure plug 20 is intended to close off the neck finish in a sealed manner so that the contents of the container will not spill or leak or unintentionally receive any contaminants (see FIGS. 4 and 4A). In order to establish the desired leak-tight seal for the neck finish, it is important for the sealing gasket 22 to push tightly against inner annular inclined surface 34 of lip 31. In the FIG. 3 illustration, surface 34 has an inclined shape converging toward the interior of the container. The three-dimensional shape of surface 34 is conical.

Referring now to the assembly illustrations of FIGS. 4 and 4A it will be seen that in order to close off the neck finish 30 in a leak-tight manner, the lower end 37 of the threaded portion 26 is inserted into the uppermost portion 38 of the hollow interior 32. Once the lowermost thread 39 of the closure plug is advanced into position against the uppermost thread 40 of the neck finish, the closure plug 20 is rotated in a clockwise direction for threaded engagement. With continued clockwise rotation of the closure plug 20, the closure plug threadedly advances farther into the neck finish. This draws the flange 25 close to lip 31 which in turn draws the sealing gasket into initial contact against the inclined surface 34 of annular lip 31 of the neck finish 30. With continued tightening rotation of the closure plug into the neck finish, the integral sealing gasket 22 is clamped between the flange 25 and lip 31 and is pressed tightly against the inner annular edge 34 of the upper lip. The compression of the sealing gasket in this manner creates a liquid-tight interface between the closure plug 20 and the neck finish 30. The assembly of the closure plug 20 into the container outlet (i.e. neck finish 30) is illustrated in FIG. 4. The detail of the gasket 22 compression against surface 34 is illustrated in FIG. 4A.

The material choice for the sealing gasket is one consideration in view of the temperature range which may be experienced as well as the types of chemicals which may be present. However, the shape of the surface that is drawn into contact with the upper lip 31 of the neck finish is another consideration. Since the closure plug 20 is to be used on a variety of containers, the neck finish of each container needs to be considered. Differences in the size and shape of the upper lip between different containers will have an effect on the reliability of the sealed interface, depending on the size and shape of the sealing gasket 22. In other words, if the abutting surface of the gasket has one shape, it may provide an excellent seal for one style of upper lip, but not necessarily for a different style of upper lip. By changing the style and geometry of the sealing gasket according to the style of the upper lip on the container outlet opening, the integrity and reliability of the sealed interface can be optimized.

When the sealing gasket is not integral with the closure plug body, there is a risk that during installation it will turn or twist and as a result be misaligned. As a way to get around this problem, sealing gasket designs have typically been limited to either a flat, square-cut style, or to an O-ring style. The problem with limiting the sealing gasket to one of these two shapes is that the integrity and reliability of the sealed interface may not be optimized, depending on the upper lip shape of the outlet opening.

Another concern with the use of a non-integral sealing gasket is the time and expense associated with the assembly of the gasket onto the closure plug body. Since this assembly step is typically performed manually, the labor expenses may be as much as the cost to mold the closure plug body. When the sealing gasket is integrally molded and bonded directly to the closure plug body, two issues are addressed. First, the automated molding process eliminates the need to manually assemble the sealing gasket onto the closure plug body. Secondly, the sealing gasket is able to be molded with a size and shape which is specifically designed for the style of neck finish which is present on the intended receiving container. The specific nature of the upper lip of the outlet opening is evaluated and the optimum sealing gasket shape is then determined. Once this is done, the sealing gasket is able to be molded with that specific shape and the resultant closure plug is created and is identified for use on that particular container. By bonding the sealing gasket directly to the closure plug body by molecular cross-linking or fusing, the gasket 22 is precluded from wandering or shifting relative to the closure plug body 21.

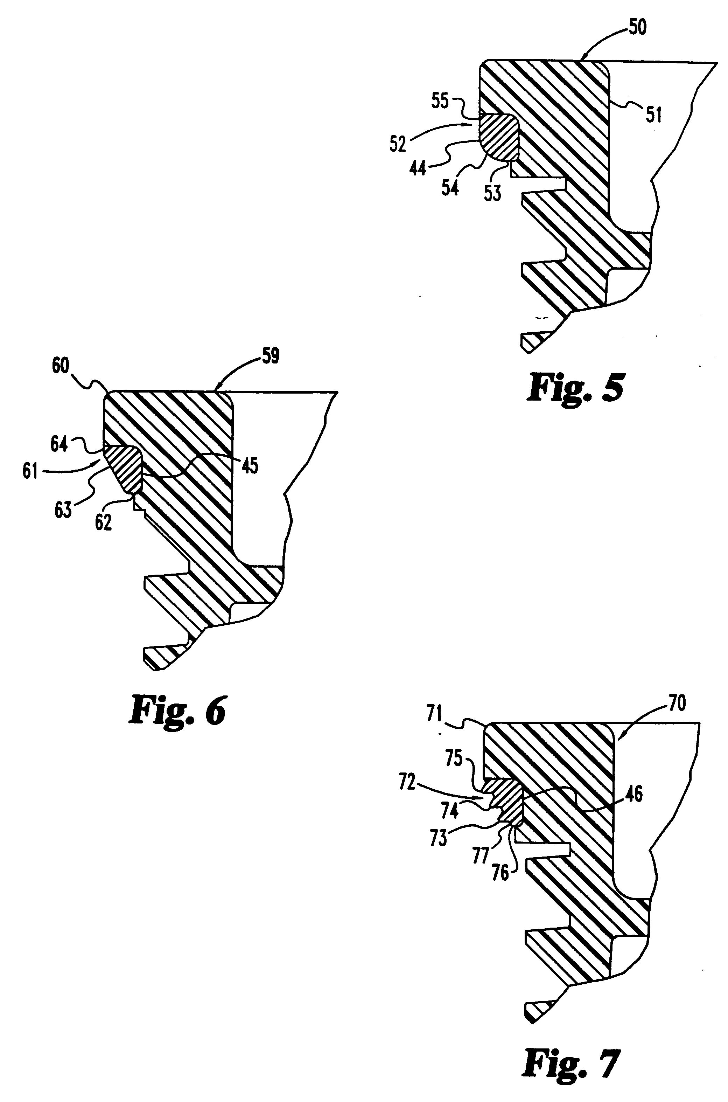

In FIGS. 1 and 3, a particular gasket 22 shape and a particular neck finish 30 style are illustrated. Gasket 22 has a contacting surface shape which approximates a portion of a parabola. As an alternative embodiment the contacting surface shape (in cross-section) can approximate a portion of a circle. The operating thickness of the gasket relative to its durometer is sufficient to flex and conform to inclined surface 34 which is set at a 60 degree angle relative to horizontal (30 degrees off of vertical). In FIGS. 5, 6, and 7, three other sealing gasket styles are illustrated, each in combination with a suitable closure plug body. Each gasket style 44, 45, and 46, respectively, is a suitable choice for use with the style of neck finish represented by neck finish 30 as illustrated in FIGS. 3, 4, and 4A.

Referring to FIG. 5., closure plug 50 is illustrated in partial form with sealing gasket 44 securely bonded to closure plug body 51 in accordance with the present invention as previously described for the FIG. 1 closure plug 20. Annular gasket 44 has a size which is similar to gasket 22 and is positioned on its corresponding plug body 51 in a similar manner. However, the exposed surface 52 which contacts inclined surface 34 has a different geometry. The exposed surface 52 of sealing gasket 44, as illustrated in cross-section, includes a flat portion 53 which smoothly transitions into a radiused portion 54 which smoothly transitions into flat portion 55. As illustrated, flat portion 53 is substantially perpendicular to flat portion 55.

Referring to FIG. 6, closure plug 59 is illustrated in partial form with annular sealing gasket 45 securely bonded to closure plug body 60 in accordance with the present invention as previously described for the FIG. 1 closure plug 20. Annular gasket 45 has a size which is similar to gaskets 22 and 44 and is positioned on its corresponding plug body 60 in a similar manner. However, the exposed surface 61 which contacts inclined surface 34 has a different geometry. The exposed surface 61 of sealing gasket 45, as illustrated in cross-section, includes a flat portion 62 which bends with a slight radius into inclined flat portion 63 which bends with a slight radius into flat portion 64. As illustrated in FIG. 6, flat portion 62 is substantially perpendicular to flat portion 64.

When describing the geometry of gaskets 44 and 45, the selected terminology which has been used is based on the two dimensional cross-sectional shape which is illustrated. Since gaskets 44 and 45 are in fact annular, three dimensional members, terminology such as "flat portion 62" must be understood in the context of an annular ring shape. The so-termed "inclined flat portion 63" is actually a conical shape in its three dimensional form as would be understood from the fact that the gaskets are annular in shape.

Referring to FIG. 7, closure plug 70 is illustrated in partial form with annular sealing gasket 46 securely bonded to closure plug body 71 in accordance with the present invention as previously described for the FIG. 1 closure plug 20. Annular gasket 46 has a size which is similar to gaskets 22, 44 and 45 and is positioned on its corresponding plug body 71 in a similar manner. However, the exposed surface 72 which contacts inclined surface 34 has a different geometry. The exposed surface 72 of sealing gasket 46, as illustrated in cross-section, includes a series of three annular sealing fingers 73, 74, and 75, each of which have a similar shape and are axially spaced apart from each other in a tapered or inclined direction. The exposed surface 72 begins with a lower tip 76 which smoothly transitions into a small inclined portion 77 which bends into the first sealing finger 73. This particular geometry is repeated finger-to-finger, wherein each finger is separated from the adjacent finger by a short inclined portion which is actually a conical surface in three-dimensional form.

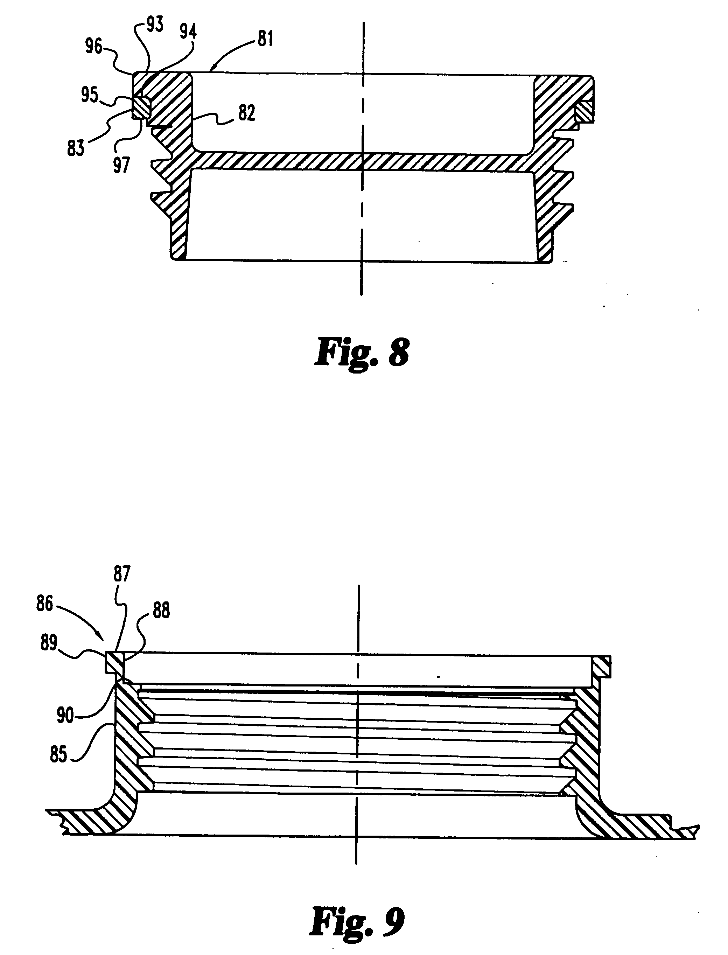

Referring to FIG. 8 another closure plug embodiment according to the present invention is illustrated. Closure plug 81 includes a plastic closure plug body 82 and a flexible, polymeric sealing gasket 83. Gasket 83 is bonded to closure plug body 82 by the previously described two-step injection molding process. The fused interface between the gasket and the closure plug body creates an integral combination as heretofore described. Closure plug 81 is specifically styled for assembly to the container neck finish 85 which is illustrated in FIG. 9. Neck finish 85 includes an upper annular lip 86 which is shaped with a substantially flat upper surface 87, an inner substantially cylindrical surface 88, an outer substantially cylindrical surface 89, and a substantially horizontal shelf 90. As has been previously described and as would be understood with regard to the illustrations of FIG. 9, the upper surface 87 has an annular ring shape as does the substantially horizontal shelf 90. Surfaces 88 and 89 are substantially concentric to each other.

The outer diameter size of the upper annular flange 93 of the closure plug 81 is slightly smaller than the inside diameter defined by inner surface 88. The annular sealing gasket 83 is seated into annular channel 94 such that the outer surface 95 is flush with the outside diameter surface 96 of flange 93. The underside surface 97 of gasket 83 is substantially flat and substantially parallel to horizontal shelf 90 when the closure plug is threaded into the internally threaded neck finish 85. Outer surface 95 is substantially perpendicular to surface 97.

As the closure plug 81 is threadedly advanced into the neck finish 85, the gasket 83 is drawn into contact against horizontal shelf 90. With continued advancement, a liquid-tight interface is established between the closure plug 81 and the neck finish 85. As can be seen by a comparison between the embodiment of FIGS. 8 and 9 and the earlier embodiments, the container neck finish has a different geometry. The inclined surface 34 which provided the surface for sealing engagement by the corresponding gasket is not part of the FIG. 9 embodiment and has been replaced, functionally, by horizontal shelf 90. Accordingly, the style and geometry of gasket 83 has been selected as the preferred gasket style for this particular style of neck finish.

As described in each of the illustrated closure plugs, the sealing gasket is integrally bonded to the closure plug body. This fabrication approach is important as a way to eliminate the time and expense of manual assembly of a separate sealing gasket. This fabrication approach also avoids the problem of the gasket turning or twisting during assembly and a result of this becoming improperly aligned. By creating a molded gasket, greater versatility is permitted so that the gasket shape can be specifically styled to match the upper lip of the cooperating neck finish.

The initial step in producing a closure plug according to the present invention is to form the closure plug body. This is done by injecting either a polyethylene material or a polypropylene material into a mold cavity which is designed according to the requisite closure plug body configuration. The press then opens and rotates 180 degrees and lines up the plug body, which is still in the process of curing, with a stationary mold cavity. This stationary mold cavity provides the void for the second injection step. At this point in the fabrication process, a suitable gasket material which has been heated so as to have the desired viscosity and be flowable, is injected so as to create the sealing gasket. Since the plug body material is still curing at the time the gasket material is injected, this process can be thought of and is referred to as a two-step injection molding process.

A suitable material for the sealing gasket is a thermoplastic elastomer which has an EPDM base to which polypropylene has been added. One commercial material which meets this material specification is offered by DSM Thermoplastic Elastomers, Inc. of Leominster, Massachusetts. This material is presently offered under the registered trademark of SARLINK@. At the time of injection of the sealing gasket material, such as the SARLINK® material, it is in a molten state. Further, the polypropylene in the sealing gasket material is compatible with the material used for the closure plug body, whether polyethylene or polypropylene, which is in the process of being cured when the sealing gasket material is injected. As a result, there is a molecular blending of the two materials at their abutment interface in what is described as a fusing or cross-linked bonding of the two materials at a molecular level. The result is a sealing gasket that is integrally bonded to the closure plug body.

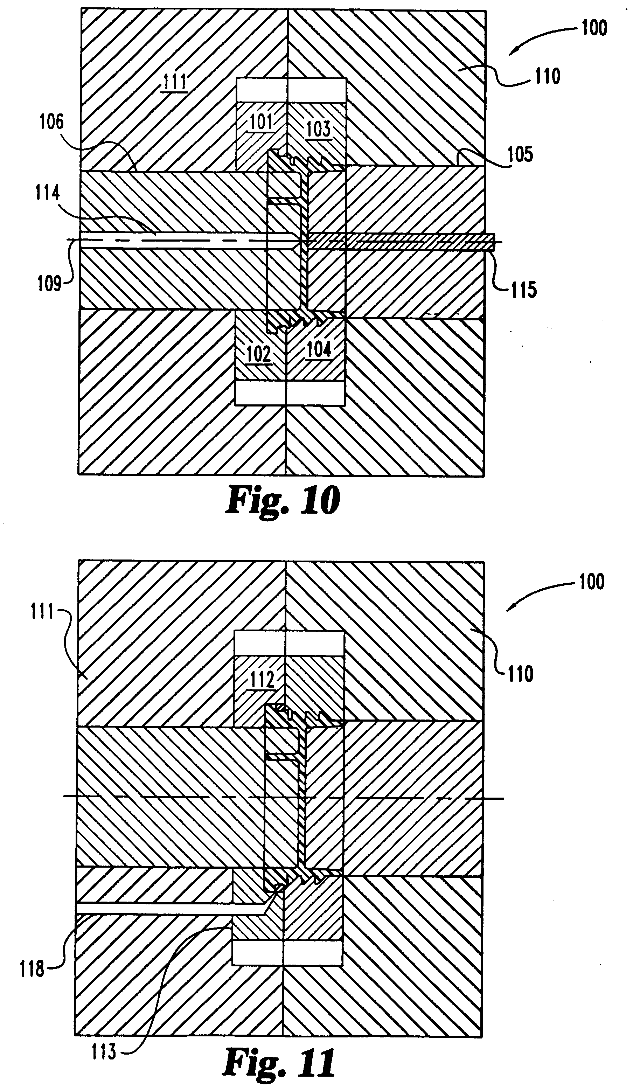

The mold design and related fixturing which are used for the fabrication of the closure plugs according to the present invention are diagrammatically illustrated in FIGS. 10 and 11. FIG. 10 is a cross-sectional side elevational view of a first station of the two-step injection molding process. It is at this station that the plug body 21 is molded. FIG. 11 is a cross-sectional side elevational view of the second station of the molding process. It is at this second station that the sealing gasket 22 is molded and bonded to the still-curing plug body 21.

Referring to FIG. 10, the illustrated molding fixture 100 includes a first pair of split blocks 101 and 102 which define the mold cavity for the annular flange 25 portion of the plug and the channel 27 portion which is to receive the sealing gasket 22. A second pair of split blocks 103 and 104 define the mold cavity for the external threads of the plug body 21. Core pin 105 forms the bottom cavity of the plug body and core pin 106 forms the top portion of the plug body.

Once the polymeric material for the plug body is injected, split blocks 101 and 102 open up and the molding fixture 100 separates along centerline 109 such that the moving side 110 is approximately 3 inches away from the stationary side 111. At this point in the process, the moving side 110 of the molding fixture 100 is rotated 180 degrees in order to position the plug body at the second station (see FIG. 11). It is the moving side 110 of the molding fixture which actually transfers the still-curing plug body from the first station to the second station. In this position, the moving side 110 lines up with a different set of split blocks 112 and 113 for molding the sealing gasket. In the FIG. 10 arrangement, the polymeric material for the plug body is injected through the sprue pathway 114 located in core pin 106. The ejector pin 115 which is located in core pin 105 is used to eject the finished part from the second station.

Referring to FIG. 11, the molding fixture 100 is diagrammatically illustrated at the second station where the sealing gasket 22 is added. Split blocks 112 and 113 define an annular mold cavity which has the required size and shape geometry for the sealing gasket, regardless of the particular gasket style or geometry which may have been selected. The gasket material is injection through sprue pathway 118 once the moving side 110 recloses against the stationary side 111. Once the gasket is formed and the part is cured, the split blocks 103, 104, 112, and 113 release and the mold is opened. The ejector pin is used to eject the finished part.

Due to the presence of two molding stations and the 180 degree rotation of the moving side, both stations can be in operation at the same time. So long as the moving side 110 is configured with a second arrangement to that illustrated in FIG. 10, positioned 180 degrees apart, both stations can be used simultaneously. This enables a second plug body to be molded at the first station (see FIG. 10) while the sealing gasket is being molded to the first plug body at the second station (see FIG. 11). This two-station arrangement reduces the cycle time such that the overall cycle time is roughly equal to the cycle time for molding the plug body, plus two to three seconds for rotating the mold.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. A closure plug device for closing off the neck finish of container in a liquid-tight fashion comprises:
a closure plug body having an annular flange at one end and opposite thereto an externally threaded portion, said closure plug body being formed out of a synthetic material;
and
an annular sealing gasket which is fabricated out of a thermoplastic elastomer of an EPDM base with polypropylene added, said sealing gasket being integrally bonded to said closure plug body at a molecular level.

2. A closure plug device for threaded receipt by a container for closing an outlet opening of said container comprises;
a closure plug body which is formed out of a synthetic material; and
a sealing gasket which is fabricated out of a thermoplastic elastomer and molecularly bonded to said closure plug body.

3. A device comprising:
a container having a raised neck finish defining an outlet opening with an upper annular edge; and
a closure plug for threaded receipt by said container for closing the outlet opening of said raised neck finish, said closure plug comprising:
a closure plug body which is formed out of a synthetic material; and
a sealing gasket which is fabricated out of a thermoplastic elastomer and molecularly bonded to said closure plug body.

4. A device according to claim 3, wherein the annular sealing gasket is fabricated out of a thermoplastic elastomer of an EPDM base with polypropylene added, said sealing gasket being integrally bonded to said closure plug body at a molecular level.

5. A device according to any preceding claim wherein said annular sealing gasket has an outer contacting surface with a cross-sectional geometry which approximates the shape of a portion of a parabola.

6. A device according to any of claims 1 to 4, wherein said annular sealing gasket has an outer contacting surface with a cross-sectional geometry which includes two spaced-apart substantially flat portions which are separated by an integral radiused portion.

7. A device according to claim 5 wherein a first one of said two spaced-apart substantially flat portions extends in a first direction and a second one of said two spaced-apart substantially flat portions extends in a second direction which is substantially perpendicular to said first direction.

8. A device according to any of claims 1 to 4 wherein said annular sealing gasket has an outer contacting surface with a cross-sectional geometry which includes three substantially flat portions, each one of said three substantially flat portions extending in a different direction.

9. A device according to claim 8, wherein a first one of said three substantially flat portions extends in a first direction, a second one of said three substantially flat portions extends in a second direction which is substantially perpendicular to said first direction, and a third one of said three substantially flat portions being positioned between said first and second ones of said three substantially flat portions and being arranged in an inclined direction relative to said first and second directions.

10. A device according to any of claims 1 to 4, wherein said annular sealing gasket has an outer contacting surface with a cross-sectional geometry which includes a plurality of spaced-apart, outwardly extending sealing fingers.

11. A molding fixture for fabricating a closure plug body in combination with an integrally bonded sealing gasket, said molding fixture comprising:
a stationary mold portion defining two molding stations, a first one of said two molding stations constructed for the molding of part of said closure plug body and a second one of said two molding stations constructed for the molding of said sealing gasket to the closure plug body; and
a moving mold portion constructed for the molding of part of said closure plug body, said moving portion being movable away from said stationary portion and being movable toward said stationary portion and further being rotatable relative to said stationary portion for moving said closure plug body from said first station to said second station.
